(19) Europäisches Patentamt
European Patent Office
Office européen des brevets

(11) Numéro de publication: **0 374 017 B1**

(12) **FASCICULE DE BREVET EUROPEEN**

(45) Date de publication de fascicule du brevet: **09.03.94**

(51) Int. Cl.$^5$: **C01B 33/32**

(21) Numéro de dépôt: **89403394.3**

(22) Date de dépôt: **07.12.89**

(54) **Silicates granulés à vitesse de dissolution améliorée.**

(30) Priorité: **12.12.88 FR 8816312**

(43) Date de publication de la demande:
**20.06.90 Bulletin 90/25**

(45) Mention de la délivrance du brevet:
**09.03.94 Bulletin 94/10**

(84) Etats contractants désignés:
**AT BE CH DE ES FR GB GR IT LI LU NL SE**

(56) Documents cités:
**EP-A- 0 059 088**
**EP-A- 0 267 042**
**DE-A- 2 242 157**
**FR-A- 1 225 168**
**US-A- 2 078 836**
**US-A- 3 039 971**
**US-A- 4 075 117**

(73) Titulaire: **RHONE-POULENC CHIMIE**
**25, quai Paul Doumer**
**F-92408 Courbevoie Cédex(FR)**

(72) Inventeur: **Malassis, Marc**
**4, Résidence des Grands Arbres**
**Le Plessis Bouchard**
**F-95130 Franconville(FR)**
Inventeur: **Parker, Philippe**
**8E, Rue de Bournonville**
**F-60200 Compiègne(FR)**

(74) Mandataire: **Dubruc, Philippe et al**
**RHONE-POULENC CHIMIE**
**Service Brevets Chimie**
**25, quai Paul-Doumer**
**F-92408 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention concerne de nouveaux granulés de silicate, elle concerne également leur procédé de préparation et leur utilisation dans les compositions détergentes.

Les silicates et surtout les métasilicates sont des composés communément utilisés dans les compositions détergentes pour le lavage mécanique de la vaisselle. Ces composés et surtout les métasilicates apportent l'alcalinité nécessaire pour un nettoyage efficace de la vaisselle. De part leur côté alcalin ils sont actifs vis à vis de la saleté mais en contrepartie dangereux particulièrement lors de leur absoption par de jeunes enfants.

Les formulateurs de détergents pour les machines à laver la vaisselle cherchent depuis quelques années à résoudre ce problème de sécurité tout particulièrement en remplaçant les métasilicates par des silicates ayant un rapport $SiO_2/Na_2O$ plus élevé.

Ces silicates de rapport plus élevé, de préférence de rapport 2 qui se présentent actuellement sur le marché sont des silicates obtenus par atomisation. Ils ont de par leur procédé de préparation une densité faible, souvent inférieure à 0,5 g/cm$^3$ et une granulométrie très fine souvent inférieure à 0,4 mm.

Les rares documents qui décrivent des silicates ayant un rapport supérieur à 1 et présentent une densité supérieure à 0,6 g/cm$^3$ sont le brevet US 3931036 et le brevet FR 2227224. Ces deux brevets proches l'un de l'autre décrivent un procédé de granulation par compactage mécanique des poudres de silicate ayant un rapport $SiO_2/Na_2O$ compris entre 0,8 et 4,0. Le brevet américain concerne un procédé équivalent au brevet français dans lequel on ajoute à la poudre de silicate une solution de silicate.

Les granulés obtenus présentent la densité et la granulométrie désirées pour leur utilisation c'est-à-dire une densité supérieure à 0,5 g/cm$^3$ et une granulométrie comprise entre 0,4 mm et 1,6 mm.

Ils présentent néanmoins tous les deux le même inconvénient : leur vitesse de dissolution est insuffisante.

La présente invention a permis d'atteindre des granulés présentant les caractéristiques suivantes :

- une densité élevée
- une granulométrie élevée
- une vitesse de dissolution élevée.

Ils sont constitués d'un mélange de silicate et d'un dérivé de cellulose.

Le silicate objet de la présente invention est choisi parmi les silicates ayant un rapport $SiO_2/Na_2O$ supérieur ou égal à 1 et inférieur ou égal à 4. Le silicate est donc choisi parmi les métasilicates ou les silicates de plus haut rapport. On préfère néanmoins utiliser les silicates ayant un rapport $SiO_2/Na_2O$ voisin de 2.

Le silicate, objet de l'invention, comme indiqué plus haut, composé de silicate et d'un dérivé cellulosique, présente de préférence une densité supérieure ou égale à 0,65 g/cm$^3$.

Il est constité de :

90 à 99 % en poids de silicate

et 1 à 10 % en poids de dérivés cellulosiques.

Il est préférentiellement constitué de :

94 à 98 % en poids de silicate

et 2 à 6 % en poids de dérivés cellulosiques.

Les dérivés cellulosiques sont choisis par exemple parmi :

- les éthers de cellulose,
- les esters de cellulose,
- les polysaccharides

On peut citer de façon uniquement illustrative parmi les esters et les éthers de cellulose :

- les carboxyméthylcelluloses (CMC) commercialisées par exemple sous la marque Blanose$^R$
- les hydroxyméthylcelluloses commercialisées par exemple sous la marque Natrosol$^R$
- les méthylcelluloses commercialisées par exemple sous la marque Méthocel$^R$
- les hydroxypropylméthylcelluloses commercialisées par exemple sous la marque Méthocel$^R$
- les hydroxybutylméthylcelluloses commercialisées par exemple sous la marque Méthocel$^R$

Parmi l'ensemble des dérivés cellulosiques précédemment cités on préfère utiliser les carboxyméthylcelluloses.

Ce sont elles en effet qui présentent les meilleures capacités de gonflement dans l'eau et ainsi permettent la dissolution la plus rapide du granulé de silicate.

Parmi les polysaccharides on peut citer la gomme xanthane.

Les silicates utilisés dans le procédé de la présente invention présentent de préférence un rapport $SiO_2/Na_2O$ compris entre 1 et 4,0, une granulométrie inférieure à 0,35 mm, une densité comprise entre 0,40

et 0,65 et une teneur en eau comprise entre 15 et 25 %.

Le procédé de préparation des granulés de silicates objet de l'invention consiste à préparer un mélange pulvérulent de silicate et de dérivé cellulosique et à effectuer un compactage mécanique suivi d'une étape de broyage.

Le compactage peut être effectué avec tout type d'appareils tels que notamment les machines à compacter vendues par les sociétés :

- ALEXANDERWERK
- BEPEX
- KAHL
- KOPPERN
- SAHUT CONREUR

La pression appliquée sur le mélange pulvérulent peut varier entre 50 et 100 bar.

La température à laquelle est réalisée le compactage ne doit pas être trop élevée afin de ne pas dénaturer le dérivé cellulosique. Elle est de préférence comprise entre la température ambiante et 60 ° C.

L'étape de compactage est suivie d'une étape de broyage afin d'obtenir des granulés de diamètre défini compris entre 0,4 mm et 1,5 mm.

Ce broyage est effectué dans tout type de broyeur habituellement utilisé en détergence. Les granulés obtenus par le procédé de l'invention sont utilisés comme agents de nettoyage dans les compositions détergentes de préférence pour le lavage de la vaisselle.

L'invention sera plus complètement décrite à l'aide des exemples suivants qui ne doivent pas être considérés comme limitatifs de l'invention.

EXEMPLES

Préparation des granulés :

On introduit dans un mélangeur Lödige de type M5G un mélange de 2850 g de disilicate rapport

$$\frac{SiO_2}{Na_2O} = 2$$

X % de carboxyméthylcellulose

La vitesse du mélangeur est de 1500 T/mn. Le mélange à sec des deux produits s'effectue en 30 minutes.

Le mélange obtenu est introduit dans un compacteur ALEXANDER WERKE. La vitesse d'alimentation est maximale. La vitesse des rouleaux est de 0,063 m/s. Les rouleaux sont lisses. On laisse refroidir les bandes jusqu'à température ambiante. On broye les bandes dans un broyeur FORPLEX. On tamise et on récupère les granulés compris entre 0,4 et 1,4 mm.

Test de mesure de la densité apparente

On remplit une éprouvette graduée de 250 ml, on la retourne et on la remet en position initiale, on regarde le volume et on pèse.

Test de dissolution des granulés :

On introduit 17 g de granulés dans 500 ml d'eau, on agite à 400 tours/mn. On suit la conductivité qui détermine le niveau de dissolution. La transmittance (T) donne une notion de turbidité du milieu. Plus la transmittance est élevée pour le silicate

$$\frac{SiO_2}{Na_2O} = 2$$

plus le produit est dissous.

EXEMPLES 1 A 3 ET COMPARATIF 1

On introduit dans ces exemples 5 % de carboxyméthylcellulose.
La pression de compactage est de 50 bar.
La température de compactage est la température ambiante.
L'essai comparatif est effectué en l'absence d'ajout de CMC.

Tableau 1

| Ex | Nature de la CMC | densité apparente (g/cm$^3$) | Temps de dissolution en secondes | | T (%) |
|---|---|---|---|---|---|
| | | | 95 % | 100 % | |
| Comparatif 1 | Sans C.M.C. | 0,72 | 186 | 333 | 85,0 |
| 1 | Blanose BWS$^R$ | 0,68 | 85 | 150 | 80,0 |
| 2 | Blanose R130$^R$ | 0,68 | 96 | 144 | 85,0 |
| 3 | Blanose 7M$^R$ | 0,68 | 87 | 260 | 85,0 |

EXEMPLES 4 A 5

La quantité de carboxyméthylcellulose introduite est indiquée dans le tableau 2.
Les pression et température de compactage sont identiques à celles utilisées dans les exemples précédents.

Tableau 2

| Influence du taux de CMC (Blanose BWSR) | | | | | |
|---|---|---|---|---|---|
| Ex | % de CMC ajouté | densité apparente (g/cm$^3$) | Temps de dissolution en secondes | | T (%) |
| | | | 95 % | 100 % | |
| 1 | 5 % | 0,68 | 85 | 150 | 80,0 |
| 4 | 2,5 % | 0,71 | 135 | 223 | 82,5 |
| 5 | 1 % | 0,72 | 150 | 255 | 85,0 |
| Comparatif 1 | 0 % | 0,72 | 186 | 333 | 85,0 |

EXEMPLES 6 ET 7 ET COMPARATIF 2

La quantité de carboxyméthylcellulose introduite est indiquée dans le tableau 3.
La pression de compactage est de 70 bars.
La température de compactage est la température ambiante.

Tableau 3

| Influence du taux de CMC (Blanose BWSR) | | | | | |
|---|---|---|---|---|---|
| Ex | % de CMC ajouté | dapp (g/cm$^3$) | Temps de dissolution t(o) | | T (%) |
| | | | 95 % | 100 % | |
| 6 | 2,5 % | 0,75 | 172 | 352 | 84,0 |
| 7 | 1 % | 0,72 | 229 | 543 | 85,0 |
| Comparatif 2 | 0 % | 0,76 | 243 | 423 | 85,0 |

EXEMPLES 8 ET 9

La quantité de carboxyméthylcellulose (Blanose BWSR) utilisée est de 2,5 % en poids. La pression de compactage est égale à 50 bar.

Tableau 4

| Influence de la température de compactage | | | | | |
|---|---|---|---|---|---|
| Ex | Température des Rouleaux | dapp (g/cm$^3$) | Temps de dissolution t(o) | | T (%) |
| | | | 95 % | 100 % | |
| 4 | Ambiante | 0,71 | 135 | 223 | 82,5 |
| 8 | T = 40°C | 0,70 | 127 | 360 | 84,0 |
| 9 | T = 75°C | 0,72 | 160 | 301 | 83,0 |
| Comparatif 1 | Disilicate Ambiante | 0,72 | 186 | 333 | 85,0 |

EXEMPLES 10 ET 11

La quantité de carboxyméthylcellulose (Blanose BWSR) utilisée est de 2,5 % en poids. La pression de compactage est égale à 70 bar.

Influence de la température de compactage

| Ex | Température des Rouleaux | densité apparente (g/cm$^3$) | Temps de dissolution en secondes | | T (%) |
|---|---|---|---|---|---|
| | | | 95 % | 100 % | |
| 6 | Ambiante | 0,75 | 172 | 352 | 85,0 |
| 10 | T = 40°C | 0,75 | 192 | 363 | 82,5 |
| 11 | T = 75°C | 0,77 | 276 | 579 | 83,0 |
| Comparatif 2 | Disilicate Ambiante | 0,76 | 243 | 423 | 85,0 |

EXEMPLES 12 ET COMPARATIF 3

Matières premières

Silicate 5atomisé de rapport $SiO_2/Na_2O$ = 3,3
Carboxyméthylcellulose = R 130 vendu par la société NOVACEL
7 M vendu par la société HERCULES

Conditions de compactage

Appareil Alexanderwerk
Pression de compactage : 70 bars à la température ambiante
Vitesse d'alimentation : 28 tours/minute
Vitesse des rouleaux : 0,063 m/s.

Les produits à compacter sont tamisés de façon à conserver un diamètre moyen compris entre 0,4 et 1,25 mm.

Le temps de solubilisation des cogranulés silicate 5Na$^{r}$/CMC étant très long et les silicates de haut rapport $SiO_2/Na_2O$ apportant des insolubles, nous avons effectué les mesures à des temps donnés correspondant à une fraction de produit dissous.

La solubilité est estimée par la mesure de la conductance dans un conductimètre COM 83 de la société RADIOMETER (COPENHAGEN).

Plus la conductance est élevée mieux le produit est dissous.

La solubilité est aussi mésurée par la transmitance. Dans le cas du silicate 5Na, qui est peu soluble dans l'eau, plus le granulé sera délité, plus la transmitance sera faible donc meilleur sera le produit.

Les résultats sont indiqués dans le tableau 1 suivant.

La présence de carboxyméthylcellulose améliore nettement la vitesse de dissolution.

TABLEAU 1

| EX | Nature du produit | %$H_2O$ | densité apparente g/cm³ | SOLUBILITE Conductance mS/cm | T | Conductance mS/cm | T | Conductance mS/cm | T | Conductance mS/cm | T |
|---|---|---|---|---|---|---|---|---|---|---|---|
| | | | | 300 s | | 600 s | | 1 200 s | | 1 800 s | |
| COMP 3 | 5NA | 19,3 | 0,79 | 4,3 | 42 % | 5,7 | 23 | 6,9 | 8,5 | 8,5 | 6,0 |
| 12 | 5NA avec 5 % CMC * | 18,8 | 0,72 | 4,5 | 5,0 | 6,4 | 3,5 | 9,2 | 3,0 | 10,1 | 4,0 |

* les 5 % de CMC sont partagés 50/50 entre la CMC R 130 et 7 M

## Revendications

1. Granulés de silicates à vitesse de dissolution améliorée ayant un rapport molaire $SiO_2/Na_2O$ supérieur ou égal à 1 et inférieur ou égal à 4 présentant une densité supérieure ou égale à 0,65 g/cm$^3$ caractérisé en ce qu'ils sont constitués de :
   90 à 99 % en poids de silicate
   1 à 10 % en poids de dérivés cellulosiques

2. Granulés selon la revendication 1 caractérisés en ce qu'ils sont constitués de :
   94 à 98 % en poids de silicate
   2 à 6 % en poids de dérivés cellulosiques

3. Granulés selon les revendications 1 ou 2 caractérisés en ce que le dérivé cellulosique est choisi parmi les éthers de cellulose, les esters de cellulose et les polysaccharides.

4. Granulés selon la revendication 3 caractérisés en ce que le dérivé cellulosique est choisi parmi les éthers de celluloses tels que les carboxyméthylcelluloses, les hydroxyéthyl celluloses, les méthylcelluloses, les hydroxypropylméthyl celluloses, les hydroxybutylcelluloses.

5. Granulés selon la revendication 4 caractérisés en ce que le dérivé cellulosique est la carboxyméthylcellulose.

6. Procédé de préparation des granulés de silicates selon l'une quelconque des revendications précédentes caractérisé en ce que l'on mélange un silicate atomisé et un dérivé de cellulose, on effectue un compactage et un broyage successif.

7. Procédé selon la revendication 6 caractérisé en ce que le silicate atomisé a un rapport $SiO_2/Na_2O$ égal à environ 2.

8. Procédé selon la revendication 6 caractérisé en ce que le compactage est effectué à une pression comprise entre 50 et 100 bars.

9. Procédé selon la revendication 6 caractérisé en ce que le compactage est effectué à une température comprise entre la températue ambiante et 60 °C.

10. Utilisation des granulés selon l'une quelconque des revendications 1 à 5 dans les compositions détergentes.

## Claims

1. Granulates of silicates with an improved dissolution rate having an $SiO_2/Na_2O$ molar ratio of higher than or equal to 1 and lower than or equal to 4, having a density of higher than or equal to 0.65 g/cm$^3$, characterised in that they comprise:
   90 to 99% by weight of silicate
   1 to 10% by weight of cellulose derivatives.

2. Granulates according to claim 1 characterised in that they comprise:
   94 to 98% by weight of silicate
   2 to 6% by weight of cellulose derivatives.

3. Granulates according to claim 1 or claim 2 characterised in that the cellulose derivative is selected from cellulose ethers, cellulose esters and polysaccharides.

4. Granulates according to claim 3 characterised in that the cellulose derivative is selected from cellulose esthers such as carboxymethylcelluloses, hydroxyethylcelluloses, methycelluloses, hydroxypropylmethylcelluloses and hydroxybutylcelluloses.

5. Granulates according to claim 4 characterised in that the cellulose derivative is carboxymethylcellulose.

6. Process for the preparation of granulates of silicates according to any one of the preceding claims characterised by mixing an atomised silicate and a cellulose derivative, and effecting a compacting operation and a successive crushing operation.

7. A process according to claim 6 characterised in that the atomised silicate has an $SiO_2/Na_2O$ ratio which is about 2.

8. A process according to claim 6 characterised in that the compacting operation is effected at a pressure of between 50 and 100 bars.

9. A process according to claim 6 characterised in that the compacting operation is carried out at a temperature between ambient temperature and 60 °C.

10. Use of the granulates according to any one of claims 1 to 5 in detergent compositions.

**Patentansprüche**

1. Silikatgranulate mit verbesserter Auflösungsgeschwindigkeit, deren molares Verhältnis $SiO_2/Na_2O$ größer oder gleich 1 und kleiner oder gleich 4 und deren Dichte größer oder gleich 0,65 g/cm$^3$ ist, dadurch gekennzeichnet, daß sie aus :
   90 bis 99 Gewichts-% Silikat und
   1 bis 10 Gewichts-% Cellulosederivaten
   bestehen.

2. Granulate nach Anspruch 1, dadurch gekennzeichnet, daß sie aus :
   94 bis 98 Gewichts-% Silikat und
   2 bis 6 Gewichts-% Cellulosederivaten
   bestehen.

3. Granulate nach Anspruch 1 oder 2, dadurch gekennzeichnet, daß das Cellulosederivat unter den Celluloseethern und -estern und den Polysacchariden ausgewählt wird.

4. Granulate nach Anspruch 3, dadurch gekennzeichnet, daß das Cellulosederivat unter den Celluloseethern, wie den Carboxymethylcellulosen, den Hydroxyethylcellulosen, den Methylcellulosen, den Hydroxypropylmethylcellulosen und den Hydroxybutylcellulosen ausgewählt wird.

5. Granulate nach Anspruch 4, dadurch gekennzeichnet, daß das Cellulosederivat Carboxymethylcellulose ist.

6. Verfahren zur Herstellung von Silikatgranulaten nach einer der vorangehenden Ansprüche, dadurch gekennzeichnet, daß ein atomisiertes Silikat und ein Cellulosederivat gemischt werden, und nacheinander eine Kompaktierung und ein Zerreiben erfolgt.

7. Verfahren nach Anspruch 6, dadurch gekennzeichnet, daß das atomisierte Silikat ein Verhältnis $SiO_2/Na_2O$ von ungefähr gleich 2 aufweist.

8. Verfahren nach Anspruch 6, dadurch gekennzeichnet, daß die Kompaktierung bei einem Druck durchgeführt wird, der zwischen 50 und 100 bar beträgt.

9. Verfahren nach Anspruch 6, dadurch gekenzeichnet, daß die Kompaktierung bei einer Temperatur durchgeführt wird, die zwischen Raumtemperatur und 60 °C liegt.

10. Verwendung der Granulate nach einer der Ansprüche 1 bis 5 in Zubereitungen für Reinigungsmittel.